# EUROPEAN PATENT SPECIFICATION

(11) **EP 3 969 732 B1**
(45) Date of publication and mention of the grant of the patent: **19.03.2025**
(21) Application number: 20726965.5
(22) Date of filing: 16.05.2020
(51) Int. Cl.: F01K 25/10

(54) **CLOSED CYCLE INVENTORY CONTROL**
BESTANDSSTEUERUNG MIT GESCHLOSSENEM ZYKLUS
CONTRÔLE D'INVENTAIRE À CYCLE FERMÉ

(30) Priority: 17.05.2019 US 201962849239 P
(43) Date of publication of application: 23.03.2022
(60) Divisional application: 24217807.7
(73) Proprietor: 8 Rivers Capital, LLC, Durham, North Carolina 27701 (US)
(72) Inventor: FETVEDT, Jeremy Eron, Raleigh, North Carolina 27612 (US); FORREST, Brock Alan, Durham, North Carolina 27707 (US)
(74) Representative: Hoeger, Stellrecht & Partner Patentanwälte mbB
(86) International application number: PCT/IB2020/054653
(87) International publication number: WO 2020/234735

(56) References cited:
- US-A1- 2016 017 758
- US-A1- 2016 134 291
- US-A1- 2018 283 222

## Description

### FIELD OF THE DISCLOSURE

The presently disclosed subject matter relates to systems and methods for controlling the various aspects of a power plant. More particularly, the systems and methods can utilize a variety of signals and functions for mass management in a closed or semi-closed power cycle.

### BACKGROUND

As the world-wide demand for electrical power production increases there is a continuing need for additional power production plants to meet such needs. Closed loop or semi-closed loop power cycles utilizing a carbon dioxide working fluid (or other working fluid) can be advantageous in light of achievable efficiencies and the potential for little to no exhaust of combustion products to the atmosphere. For example, U.S. Patent No. 8,596,075 to Allam et al.

referener provides for desirable efficiencies in oxy-fuel combustion systems utilizing a recycle CO₂ stream wherein the CO₂ is captured as a relatively pure stream at high pressure. Closed loop or semi-closed loop power production cycles, however, can require inventory control to maintain required operating conditions, particularly where a variable heat input is utilized. Such inventory control can include functions, such as mass management and/or pressure management. Documents US2016/017758 A1 and US2018/283222 A1 disclose further mass management systems.

Known systems for mass management can include the use of a tank in which fluid can be stored and released. The tank is typically fluidly connected to a flow line on the low pressure side and high pressure side of a pressure increasing element (e.g., a pump or compressor). As such, fluid can be released into the line on the low pressure side and/or can be taken from the line on the high pressure side. As such, the tank is at a pressure that is between the suction pressure and the exhaust pressure of the pressure increasing element. Such systems, however, can be limited in their ability to provide for flexibility of operating parameters, such as when using variable heat input to the system. Accordingly, there is a need for further systems and methods suitable for controlling multiple aspects of power plants, particularly power plants configured for operation with a closed loop or semi-closed loop power production cycle.

### SUMMARY OF THE DISCLOSURE

A power production system according to the invention is described in claim 1 and a method for controlling inventory of a working fluid in a power production system is described in claim 7.

The present disclosure provides systems and methods for power production wherein one or more control paths are utilized for control of one or more actions. The controls can be based upon a variety of manual or automated inputs, calculated values, pre-set values, measured values, logical functions, computer algorithms, or computer program inputs.

In one or more embodiments, the present disclosure can relate to a power production system. The system can include a variety of elements effective for power production utilizing a closed loop or semi-closed loop working fluid circuit. In some embodiments, such system can comprise: a working fluid circuit through which a working fluid is cycled between a higher pressure and a lower pressure; a power generating turbine fluidly connected to the working fluid circuit so as to receive working fluid at the higher pressure, expand the working fluid, and output the working fluid from an outlet thereof at the lower pressure; a first compression component downstream of the power generating turbine and in fluid connection therewith; a second compression component downstream of the first compression component and in fluid connection therewith; a storage tank in fluid communication with the working fluid circuit; and a controller configured to transfer working fluid between the tank and one or more positions in the working fluid circuit. The system can be further defined in relation to one or more of the following statements that can be combined in any order or number.

The first compression component can be a single stage or multi-stage compressor.

The second compression component can be a variable speed pump.

The power production system further can comprise at least one line configured for passage of working fluid between the storage tank and the working fluid circuit.

The power production system further can comprise at least one valve configured for control of fluid flow through the at least one line configured for passage of working fluid between the storage tank and the working fluid circuit.

The controller can be configured to open and close the at least one valve based upon at least one conditional input received by the controller.

The at least one line configured for passage of working fluid between the storage tank and the working fluid circuit can be configured to remove working fluid from the working fluid circuit upstream from the first compression component and downstream from an outlet of the power generating turbine.

The at least one line configured for passage of working fluid between the storage tank and the working fluid circuit can be configured to remove working fluid from the working fluid circuit downstream from the first compression component and upstream from the second compression component.

The at least one line configured for passage of working fluid between the storage tank and the working fluid circuit can be configured to introduce working fluid to the working fluid circuit downstream from the first compression component and upstream from the second compression component.

The at least one line configured for passage of working fluid between the storage tank and the working fluid circuit can be configured to introduce working fluid to the working fluid circuit downstream from the second compression component and upstream from an inlet of the power generating turbine.

The power production system further can comprise a heater positioned upstream from the power generating turbine and having an outlet in fluid communication with an inlet of the power generating turbine.

The power production system further can comprise a heating/cooling component in a heating/cooling connection with the storage tank and configured for one or both of heating and cooling working fluid that is present in the storage tank.

Further examples of the presently described power production systems are evident from the further disclosure provided herein.

In one or more embodiments, the present disclosure can relate to a method for controlling inventory in a power production system utilizing a closed loop or semi-closed loop working fluid circuit. In some embodiments, such method can comprise: expanding a working fluid in a closed loop or semi-closed loop working fluid circuit across a power generating turbine from a higher pressure to a lower pressure; compressing the expanded working fluid in a first compression component; further compressing the working fluid in a second compression component; and transferring working fluid between one or more positions of the closed loop or semi-closed loop working fluid circuit and a storage tank. The method can be further defined in relation to one or more of the following statements that can be combined in any order or number.

Transferring the working fluid between one or more positions of the closed loop or semi-closed loop working fluid circuit and the storage tank can be based upon at least one conditional input to at least one controller in a working arrangement with the working fluid circuit.

The second compression component can be a variable speed pump.

The at least one conditional input to the at least one controller can include one or more of a change in an operating speed of the variable speed pump, a suction pressure measured between the first compression component and the variable speed pump, and a temperature of the working fluid at an outlet of the power generating turbine.

The closed loop or semi-closed loop working fluid circuit can be configured to maintain an operating pressure range between the first compression unit and the second compression unit, said operating pressure range being between a minimum pressure P1 and a maximum pressure P2.

The at least one controller can be configured to cause passage of working fluid from the storage tank to at least one position in the closed loop or semi-closed loop working fluid circuit to maintain pressure above the minimum pressure P1.

The passage of working fluid from the storage tank can be to at least one position in the closed loop or semi-closed loop working fluid circuit that is upstream from the first compression component and downstream from an outlet of the power generating turbine.

The passage of working fluid from the storage tank can be to at least one position in the closed loop or semi-closed loop working fluid circuit that is downstream from the first compression component and upstream from the second compression component.

The at least one controller can be configured to cause passage of working fluid to the storage tank from at least one position in the closed loop or semi-closed loop working fluid circuit to maintain pressure below the maximum pressure P2.

The passage of the working to the storage tank can be from at least one position in the closed loop or semi-closed loop working fluid circuit that is downstream from the first compression component and upstream from the second compression component.

The passage of the working to the storage tank can be from at least one position in the closed loop or semi-closed loop working fluid circuit that is downstream from the second compression component and upstream from an inlet of the power generating turbine.

The working fluid can comprise carbon dioxide.

The working fluid can be greater than 50% molar carbon dioxide.

The method further can comprise one or both of heating and cooling working fluid that is in the storage tank.

Further embodiments of the presently described method for controlling inventory in a power production system are evident from the further disclosure provided herein

### BRIEF DESCRIPTION OF THE FIGURE

Reference will now be made to the accompanying drawing, which is not necessarily drawn to scale, and wherein:

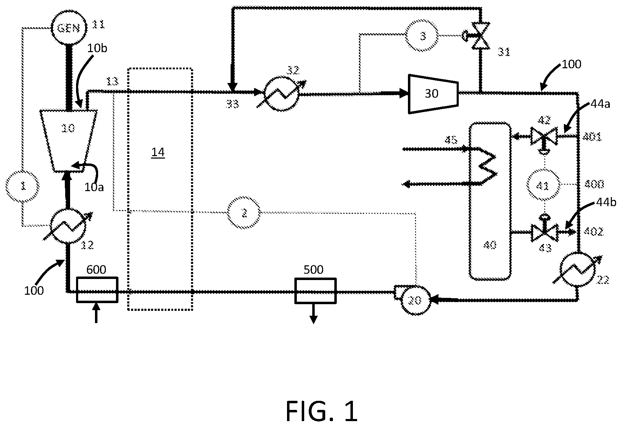

FIG. 1 is a flow diagram for a closed loop power production cycle with inventory control elements according to embodiments of the present disclosure.

### DETAILED DESCRIPTION

As used in the specification, and in the appended claims, the singular forms "a", "an", "the", include plural referents unless the context clearly dictates otherwise.

The present disclosure relates to systems and methods adapted for controlling one or more actions in the operation of a power production plant. As such, the present disclosure further relates to power production plants including a variety of elements, including such control systems. Non-limiting examples of elements that may be included in a power production plant according to the present disclosure are described in U.S. Pat. No. 8,596,075, U.S. Pat. No. 8,776,532, U.S. Pat. No. 8,959,887, U.S. Pat. No. 8,986,002, U.S. Pat. No. 9,068,743, U.S. Pat. Pub. No. 2010/0300063, U.S. Pat. Pub. No. 2012/0067054, U.S. Pat. Pub. No. 2012/0237881, and U.S. Pat. Pub. No. 2013/0213049.

In one or more embodiments, the present disclosure relates to power production system and/or method utilizing a close loop or semi-closed loop cycle. In particular, the system and/or method can incorporate elements beneficial for inventory control. In certain embodiments, said elements are configured to improve operations with improved management of mass and/or volume flows at one or more points in the cycle.

A power production system and/or method as discussed herein can exhibit improved inventory controls through utilization of a combination of elements. In some embodiments, it can be useful to utilize two independent stages of compression/pumping of fluid through the cycle. By having two independent stages of compression/pumping, the present cycle is in a beneficial position to allow the pressure between the separate, independent stages to substantially float - i.e., be within a relatively wide range defined by upper and lower boundaries. Multistage compressors/pumps are not known to exhibit such capabilities since the individual stages must be balanced carefully so that one is not in surge white the other are within normal operating parameters. By utilizing a plurality of independent stages of compression/pumping according to the present disclosure, it is possible to allow the pressure in the area between the stages to increase and/or decrease, thereby storing excess inventory and/or providing additional inventory to the cycle without the requirement of the use of added equipment. Further, a storage tank can be added between the stages with simple controls to set a maximum and minimum pressure to allow for far greater changes in cycle operating conditions.

Systems and methods according to the present disclosure thus can incorporate a variety of components operating under suitable conditions. For example, at least a power producing turbine and an associated generator for forming electricity may be combined with a plurality of independent stages of compression/pumping that are separated by piping or lines with sufficient volume to accommodate fluid storage therebetween. This can include one or more storage tanks positioned between the plurality of compression/pumping stages. One or more coolers and/or heaters may be included at one or more points in the system, for example, to remove heat from the expanded working fluid prior to compression, to remove heat or add heat between the compression/pumping stages, and/or to add heat to the working fluid prior to expansion in the turbine. In some embodiments, the power producing turbine may be a combined heater/turbine unit. Alternatively, a combustor or other heating unit may be positioned upstream from the power producing turbine, particularly directly upstream from the power producing turbine.

An embodiment of the present invention is illustrated in FIG. 1, which shows a simplified diagram of a closed loop power production cycle. It is understood, however, that the aspects of the present disclosure likewise may be incorporated, in whole or in part, into closed loop or semi-closed loop power production cycles having more or fewer parts relative to the diagram of FIG. 1. For example, the aspects of the present disclosure may be incorporated into power productions as described in any of the above documents The cycle illustrated in FIG. 1, for example, may be configured as a semi-closed loop power production cycle by introducing a valve 500 as shown in FIG. 1 as an optional component. The valve 500 may allow for withdrawal of a portion of the working fluid. Likewise, a valve 600 may be used for introduction of make-up fluid and/or fuel. The valve 500 and the valve 600 may be positioned in other locations in the illustrated power production cycle.

FIG. 1 thus shows an embodiment of a power production system including various components. A working fluid circuit 100 can include any necessary piping, lines, valves, splitters, unions, and other components that are typically utilized in a power production system for passage of a heated and/or compressed fluid therethrough. In the working fluid circuit 100, a working fluid is cycled between a higher pressure and a lower pressure. The ranges for the higher pressure and the lower pressure can vary as desired. For example, the lower pressure can be in a range of ambient pressure up to about 5 bar, about 4 bar, about 3 bar, or about 2 bar. The higher pressure can vary in a range of about 10 bar up to about 400 bar, about 15 bar to about 350 bar, or about 20 bar to about 300 bar. It is understood, however, that the terms "higher" and "lower" are meant to be relative one to another, and the higher pressure can be any pressure that is higher than the lower pressure, and the lower pressure can be any pressure that is lower than the higher pressure.

The power generating turbine 10 is fluidly connected to the working fluid circuit 100 so as to receive working fluid at the higher pressure, expand the working fluid, and output the working fluid from an outlet 10b thereof at the lower pressure. The higher pressure working fluid particularly can enter the power producing turbine 10 through an inlet 10a. A first compression component (e.g., compressor 30) is positioned downstream of the power generating turbine 10 and in fluid connection therewith such that working fluid enters the compressor 30 and is compressed to a higher pressure relative to the pressure of the working fluid at the outlet 10b of the turbine 10. The first compression component may be, for example, a single stage compressor or a multi-stage compressor. When a multi-stage compressor is used, it can be beneficial to utilize cooling between compression stages. A second compression component (e.g., pump 20) is positioned downstream of the first compression component and in fluid connection therewith. As further described herein, it can be useful, in some embodiments, for the second compression component to be a pump, such as a variable speed pump. This can be useful to provide for controlled changes to pump speed to account for changes in the working fluid inventory upstream from the pump.

A cooler 32 is positioned between the turbine 10 and the compressor 30, and a cooler 22 is positioned between the compressor 30 and the pump 20. Such coolers may be optional but can be useful for maintaining desired pressures and/or densities of the working fluid at various points in the working fluid circuit 100. As further described below, a storage tank 40 preferably can be included and be positioned so as to be in fluid communication with the working fluid circuit 100. A controller 41 can be configured to transfer working fluid between the tank 40 and one or more positions in the working fluid circuit 100. Such transfer can be automated and may be dependent upon input of one or more signals to the controller 41.

The cycle illustrated in FIG. 1 particularly illustrates the use of a controllable heat source 12 - i.e., a heat source where the input may vary over a relatively wide range. The use of a controllable heat source would typically introduce complexities that may make inventory control otherwise unattainable. The present disclosure, however, can achieve necessary inventory controls when using a controllable heat source or a heat source that provides a fixed heat input. As illustrated, the heat source 12 is a controllable heat source, but is understood that a fixed heat source may be used. Heat source 12, for example, may be a combustor, including a flexible fuel combustor as described in U.S. Pat. App. Pub. No 2018/0259183.

Other types of heat sources, such as a solar heater, a boiler, or the like may also be used.

Because of heat source 12 is controllable (or variable), the present disclosure includes control elements to manage the heat entering the system. As illustrated, a controller 1 measures the power output of a generator 11, however, several possible items may be controlled by controller 1. More particularly, controller 1 commands heat input into heat source 12 to generate the required power. If the heat source is not controllable, or otherwise controlled outside of the power loop, controller 1 is optional and not needed and the system will simply extract the maximum amount of power from the heat added in heat source 12. In one or more embodiments, one or more recuperative heat exchangers can be utilized, and recuperative heating can be beneficial under various conditions. If a recuperative heat exchanger is present, it also can be beneficial to include one or more additional heat sources to add heat to the cycle via the recuperative heat exchanger. Similarly, one or more heat exchangers may be used to remove heat from the cycle. This illustrated in FIG. 1 by heat exchanger 14, which is optional, and may be used at least for recuperative heating of the working fluid entering the heater 12 by recuperating heat from the working fluid stream exiting the turbine 10.

As heat is added to the system via heat source 12 (or a further heat source), the temperature at various points of the cycle downstream from the heat source will increase accordingly. For example, the addition of heat in heat source 12 will increase the temperature at an inlet of the turbine 10 and, after expansion through the turbine 10, the temperature at point 13 (after exiting an outlet of the turbine) will likewise change. Controller 2 can be configured to measure the temperature at one or more points in the system and accordingly command the power, or the speed, of pump 20 to change in order to maintain a constant temperature at one or more points. As illustrated in FIG. 1, controller 2 is coupled to the temperature measurement at point 13 so that control of pump 20 can be managed to achieve a constant temperature at point 13. It is understood, however, that controller 2 may be coupled to additional points in the system or to a single, different point in the system. Likewise, additional controllers may be added so that control of pump 20 may be individually coupled to temperature measurements at a plurality of different points in the system. For example, control of pump 20 may be coupled by one or more controllers to temperature measurements at any one or more of the inlet of turbine 10, the outlet of turbine 10 (i.e., point 13), the input for heat source 12, or further points in the system. Moreover, use of controller 2 to manage pump 20 may be implemented as a function of a parameter other than temperature (or in addition to temperature). Generally, any system parameter that is capable of being managed based on the output at pump 20 may be automatically controlled via controller 2 through coupling of the controller to a suitable parameter input site in the system. In this manner, regardless of the parameter being controlled, the controller can be configured to keep the parameter substantially constant and/or can be configured to make automatic adjustments to the parameter as needed. Pump 20 particularly can be a variable speed pump. Thus, the outlet flow and pressure of pump 20 can be variable and can be allowed to change in order to satisfy the inlet requirements of the turbine 10 based on the heat input of the turbine and/or based on the specific parameter that is to be managed by controller 2. For example, as illustrated in FIG. 1, it is possible to maintain fixed turbine outlet conditions at point 13 based on controller 2 managing the operation of pump 20.

Controller 3 controls spill back valve 31, which may also be referred to as a recycle valve. The controller 3 allows flow from the high pressure side of the compressor 30 to return to the suction side at point 33, upstream of cooler 32, so as not to overheat the system. In doing this, controller 3 maintains the suction pressure of the compressor 30 at a controlled value, which is in turn the turbine 10 exhaust pressure at point 13, while taking into account system losses. By fixing the turbine 10 exhaust temperature and pressure, the inlet conditions to the turbine are dictated by the amount of power generated in generator 11, and these inlet conditions will naturally be determined by the fundamental operation of the turbine, the turbine map, and the location of the exhaust on the turbine map as dictated by controllers 2 and 3. Likewise, temperature or a different parameter may be similarly fixed at a different point in the system based upon outputs provided by one or both of controllers 2 and 3.

It can be seen that as the amount of heat entering the system at heat source 12 changes, the flow through the system changes. Since the illustrated power cycle is a closed loop (and therefore has a fixed volume), the inventory in the system may need to change. The "inventory" can reference a variety of different fluids that may be in different states (e.g., gas, liquid, supercritical). The inventory particularly can be a CO₂ containing fluid, preferably a fluid that is a majority CO₂ or is substantially pure CO₂. For example, the inventory (i.e., the working fluid) can comprise more than 50% molar carbon dioxide. Substantially pure CO₂ can mean at least 98%, at least 99%, at least 99.5%, or at least 99.9% molar carbon dioxide.

The power production system further can comprise at least one line configured for passage of working fluid between the storage tank 40 and the working fluid circuit 100. In FIG. 1, line 44a is configured for passage of working fluid from the working fluid circuit 100 to the storage tank 40, and line 44b is configured for passage of working fluid from the storage tank to the working fluid circuit. It is understood, however, that a single line may be utilized or a plurality of input and/or output lines (input and output being relative to the tank) may be utilized. Any input and/or output line(s) may include at least one valve configured for control of fluid flow through the at least one line configured for passage of working fluid between the storage tank 40 and the working fluid circuit 100. In FIG. 1, line 44a includes valve 42, and line 44b includes valve 43. It is understood that the valve(s) may include a pumping component to improve active transfer of fluid to and from the storage tank 40. As further described herein, controller 41 can be configured to open and close the at least one valve (e.g., valve 42 and/or valve 43) based upon at least one conditional input received by the controller.

The inventory control tank 40 is used to store fluid that can be add to and/or removed from the cycle. As pump 20 changes speed and changes flow, the pressure in the system around point 400 will change. In order for the pump 20 to operate efficiently, there is a minimum requirement for the combination of suction pressure at point 400 and the temperature of the stream leaving cooler 22. Controller 41 uses valve 43 to add fluid at point 402 in order to maintain the pressure above a minimum pressure P1, which can be chosen based upon desired operating parameters. Also, as the cycle conditions change, the pressure at point 400 may increase and begin to approach a maximum pressure, P2. The maximum pressure can be chosen to meet any desired operating range. In particular embodiments, P2 may be chosen as a pressure that would cause either damage to the piping and other equipment, or exceed the capabilities of compressor 30. The controller 41 uses valve 42 to remove fluid from the cycle at point 401, and add it to storage tank 40, in order to keep the pressure at point 400 below the maximum pressure, P2. As such, the pressure in tank 40 will be at an intermediate point, between P1 and P2, as will point 400, although the pressures in the tank and at point 400 will be different. In this manner, small changes in operation of the turbine 10 do not impact the mass within the system since the control around the tank 40 and point 400 acts as an accumulator and keeps the mass in the system constant while allowing the pressure in this area to be between P1 and P2. If the change in conditions is significantly large, the pressure at 400 can go above or below the limits of P1 and P2. In such case, controller 41 will react to maintain the pressure within the limits.

The locations of points 400, 401, and 402 relative to each other and to cooler 22 can vary from what is illustrated in FIG. 1. That is, the order is not dictated by how they have been shown. For example, point 401 may optionally be positioned between cooler 32 and compressor 30 so that re-direction of fluid out of the cycle and into the storage tank 40 may be carried out upstream from the compressor 30 instead of downstream from the compressor. As a further example, point 402 may optionally be positioned between pump 20 and heater 12 so the introduction of fluid back into the cycle may be carried out downstream from the pump 20 instead of upstream from the pump. Additionally, it is not a requirement that two valves (42 and 43) must be used, and a single valve may instead be utilized. Still further, the functions of controller 41 may be implemented utilizing a plurality of different controllers. For example, valve 42 and valve 43 may be controlled by a first valve controller and a second, different valve controller, respectively. In addition, it is understood that pump 20 can also be referred to as a compressor since the difference is purely nomenclature and is merely for convenience. In some embodiments. controller 41 may take inputs from one or more of the suction, operating, or exhaust conditions of pump 20 and allow calculation of P2 for equipment protection in order to maintain pump operation within a desired operational range.

Optionally, the temperature in tank 40 can be controlled with a heating/cooling component 45. The heating/cooling component 45 specifically can be in a heating/cooling connection with the storage tank 40 and can be configured for one or both of heating and cooling working fluid that is present in the storage tank. Heating and cooling may be accomplished by the same component, or separate heating and cooling components may be associated with the storage tank 40.

In some embodiments, heating/cooling component 45 may be a fluid stream that can add and/or remove fluid from tank 40 to modify temperature conditions within the tank. Since the volume of the tank 40 is fixed, this would allow for additional fluid to be added to the tank 40 without increasing or decreasing the pressure beyond the P1 and P2 limits by manipulating the density within the tank. Alternatively, in a similar manner, for a given volume of tank 40 with a given mass of fluid, the pressure in tank 40 can be manipulated by changing the density of the fluid and/or by changing the temperature of the fluid such that P1 and P2 can be raised or lowered for non-steady state cases and operation, such as start-up, load following, turn down, etc. Heating/cooling component 45 thus may alternatively be a heater that applies heat to the tank (or directly to the contents of the tank) or may be a cooler that removes heat from the tank (or directly from the contents of the tank). For example, component 45 may be a jacket around the tank 40 configured to heat and/or cool the tank. As another example, component 45 may be a heat exchange line internal to the tank 40 through which a heating and/or cooling fluid may be passed to heat/cool the contents of the tank without direct intermixing with the fluid contained in the tank. Fill point for tank and pressure relief safety devices on tank 40 are not shown.

As can be seen from the foregoing, a power production system as described herein can be particularly useful in carrying out a method for controlling inventory of a working fluid in a power production system utilizing a closed loop or semi-closed loop working fluid circuit. For example, a method can comprise expanding a working fluid in a closed loop or semi-closed loop working fluid circuit across a power generating turbine 10 from a higher pressure to a lower pressure to generate power, such as electricity. The working fluid exiting the power producing turbine 10 can be compressed in a plurality of compression components, such as a first compression component and a second compression component described above. In addition, the method can include transferring working fluid between one or more positions of the closed loop or semi-closed loop working fluid circuit 100 and a storage tank 40.

As described above, transferring the working fluid between one or more positions of the closed loop or semi-closed loop working fluid circuit 100 and the storage tank 40 can be based upon at least one conditional input to at least one controller in a working arrangement with the working fluid circuit. Controller 41 illustrated in FIG. 1 can be particularly configured for controlling the transferring of working fluid between the working fluid circuit 100 and the storage tank.

As an example, when a variable speed pump (e.g., pump 20 in FIG. 1) is used as the second compression component, the at least one conditional input to the at least one controller can include one or more of a change in an operating speed of the variable speed pump, a suction pressure measured between the first compression component (e.g., compressor 30) and the variable speed pump 20, and a temperature of the working fluid at an outlet 10b of the power generating turbine 10. The controller 41, for example, can receive inputs related to one or all of the foregoing and automatically control passage of working fluid between the storage tank 40 and the working fluid circuit 100. As described above, this can be achieved utilizing a single line between the working fluid circuit 100 and the storage tank 40 wherein suitable valve(s) (and optionally pumping component(s)) can be used to cause flow, as required, from the storage tank to the working fluid circuit or from the working fluid circuit to the storage tank.

In some embodiments, such controllability can be beneficial when the closed loop or semi-closed loop working fluid circuit 100 is configured to maintain an operating pressure range between the first compression unit (e.g., compressor 30) and the second compression unit (e.g., pump 20). As previously noted, such operating pressure range can be defined to be between a minimum pressure P1 and a maximum pressure P2. In one or more embodiments, P1 and P2 will both be a pressure that is no less than the lower pressure and no greater than the higher pressure mentioned herein in reference to the power generating turbine. Specifically, P1 can be greater than or equal to the lower pressure of the working fluid exiting the outlet 10b of the turbine 10 and less than P2. Likewise, P2 can be greater than P1 and less than or equal to the higher pressure of the working fluid entering the inlet 10a of the turbine. The controller 41 can be programmed to carry out one or more functions to maintain the pressure of the working fluid circuit 100 to be within the range of P1 to P2. For example, controller 41 can be configured to cause passage of working fluid from the storage tank 40 to at least one position in the closed loop or semi-closed loop working fluid circuit 100 to maintain pressure above the minimum pressure P1. The passage of working fluid from the storage tank 40 can be to at least one position in the closed loop or semi-closed loop working fluid circuit 100 that is upstream from the first compression component (e.g., compressor 30) and downstream from the outlet 10b of the power generating turbine 10. Alternatively, or additionally, the passage of working fluid from the storage tank 40 can be to at least one position in the closed loop or semi-closed loop working fluid circuit 100 that is downstream from the first compression component (e.g., compressor 30) and upstream from the second compression component (e.g., pump 20). Similarly, controller 41 can be configured to cause passage of working fluid to the storage tank 40 from at least one position in the closed loop or semi-closed loop working fluid circuit 100 to maintain pressure below the maximum pressure P2. For example, the passage of the working to the storage tank 40 can be from at least one position in the closed loop or semi-closed loop working fluid circuit 100 that is downstream from the first compression component (e.g., compressor 30) and upstream from the second compression component (e.g., pump 20). Alternatively, or additionally, passage of the working to the storage tank 40 can be from at least one position in the closed loop or semi-closed loop working fluid circuit that is downstream from the second compression component (e.g., pump 20) and upstream from an inlet 10a of the power generating turbine 10.

In addition to the foregoing, the present method can include one or both of heating and cooling working fluid that is in the storage tank 40. This can be carried out as otherwise described above, utilizing a single heating/cooling component 45 or using a heating component and a separate cooling component.

## Claims

1. A power production system comprising:
a working fluid circuit (100) through which a working fluid is cycled between a higher pressure and a lower pressure;
a power generating turbine (10) fluidly connected to the working fluid circuit (100) so as to receive working fluid at the higher pressure, expand the working fluid, and output the working fluid from an outlet thereof at the lower pressure;
a first compression component (30) downstream of the power generating turbine (10) and in fluid connection therewith;
a second compression component (20) downstream of the first compression component and in fluid connection therewith;
a storage tank (40) in fluid communication with the working fluid circuit (100);
a controller (41) configured to transfer working fluid between the storage tank (40) and one or more positions in the working fluid circuit (100); **characterized in that** the power production system further comprises
at least one line (44a; 44b) configured for passage of working fluid between the storage tank (40) and the working fluid circuit, wherein the at least one line (44a; 44b) is configured to remove working fluid from the working fluid circuit downstream from the first compression component (30) and upstream from the second compression component (20)

2. The power production system of claim 1, wherein the first compression component (30) is a single stage or multi-stage compressor (30).

3. The power production system of claim 1, wherein the second compression component (20) is a variable speed pump (20).

4. The power production system of claim 1, wherein:
the system further comprises at least one valve (42; 43) configured for control of fluid flow through the at least one line (44a; 44b) configured for passage of working fluid between the storage tank (40) and the working fluid circuit (100); preferably wherein the controller (41) is configured to open and close the at least one valve (42; 43) based upon at least one conditional input received by the controller (41).

5. The power production system of claim 1, further comprising a heater (12) positioned upstream from the power generating turbine (10) and having an outlet in fluid communication with an inlet of the power generating turbine (10).

6. The power production system of claim 1, further comprising a heating/cooling component (45) in a heating/cooling connection with the storage tank (40) and configured for one or both of heating and cooling working fluid that is present in the storage tank (40).

7. A method for controlling inventory of a working fluid in a power production system utilizing a closed loop or semi-closed loop working fluid circuit (100), the method comprising:
expanding a working fluid in a closed loop or semi-closed loop working fluid circuit (100) across a power generating turbine (10) from a higher pressure to a lower pressure;
compressing the expanded working fluid in a first compression component (30);
further compressing the working fluid in a second compression component (20); and
transferring working fluid between one or more positions of the closed loop or semi-closed loop working fluid circuit (100) and a storage tank (40);
wherein transferring the working fluid between one or more positions of the closed loop or semi-closed loop working fluid circuit and the storage tank (40) is based upon at least one conditional input to at least one controller (41) in a working arrangement with the closed loop or semi-closed loop working fluid circuit;
wherein the closed loop or semi-closed loop working fluid circuit is configured to maintain an operating pressure range between the first compression component (30) and the second compression component (20), said operating pressure range being between a minimum pressure P1 and a maximum pressure P2.

8. The method of claim 7, wherein the second compression component (20) is a variable speed pump (20); preferably wherein the at least one conditional input to the at least one controller (41) includes one or more of a change in an operating speed of the variable speed pump (20), a suction pressure measured between the first compression component (30) and the variable speed pump (20), and a temperature of the working fluid at an outlet of the power generating turbine (10).

9. The method of claim 7, wherein the at least one controller (41) is configured to cause passage of working fluid from the storage tank (40) to at least one position in the closed loop or semi-closed loop working fluid circuit (100) to maintain pressure above the minimum pressure P1; optionally wherein one of the following conditions is met:
passage of working fluid from the storage tank (40) is to at least one position in the closed loop or semi-closed loop working fluid circuit (100) that is upstream from the first compression component (30) and downstream from an outlet of the power generating turbine (10);
passage of working fluid from the storage tank (40) is to at least one position in the closed loop or semi-closed loop working fluid circuit (100) that is downstream from the first compression component (30) and upstream from the second compression component (20).

10. The method of claim 7, wherein the at least one controller (41) is configured to cause passage of working fluid to the storage tank (40) from at least one position in the closed loop or semi-closed loop working fluid circuit (100) to maintain pressure below the maximum pressure P2; optionally wherein one of the following conditions is met:
passage of the working fluid to the storage tank (40) is from at least one position in the closed loop or semi-closed loop working fluid circuit (100) that is downstream from the first compression component (30) and upstream from the second compression component (20);
passage of the working fluid to the storage tank (40) is from at least one position in the closed loop or semi-closed loop working fluid circuit (100) that is downstream from the second compression component (20) and upstream from an inlet of the power generating turbine (10).

11. The method of claim 7, wherein the working fluid comprises carbon dioxide, preferably wherein the working fluid is greater than 50% molar carbon dioxide.

12. The method of claim 7, further comprising one or both of heating and cooling working fluid that is in the storage tank (40).

## Patentansprüche

1. Ein Leistungserzeugungssystem, umfassend:
einen Arbeitsfluidkreislauf (100), durch den hindurch ein Arbeitsfluid zwischen einem höheren Druck und einem niedrigeren Druck zyklisiert wird;
eine Leistungserzeugungsturbine (10), welche in Fluidverbindung mit dem Arbeitsfluidkreislauf (100) steht, um Arbeitsfluid bei dem höheren Druck zu empfangen, das Arbeitsfluid zu expandieren und das Arbeitsfluid an einem Auslass derselben bei dem niedrigeren Druck auszugeben;
eine erste Verdichtungskomponente (30), welche stromabwärts der Leistungserzeugungsturbine (10) und in Fluidverbindung mit derselben angeordnet ist;
eine zweite Verdichtungskomponente (20), welche stromabwärts der ersten Verdichtungskomponente und in Fluidverbindung mit derselben angeordnet ist;
einen Speicherbehälter (40) in Fluidverbindung mit dem Arbeitsfluidkreislauf (100);
eine Kontrolleinrichtung (41), welche dazu ausgebildet ist, Arbeitsfluid zwischen dem Speicherbehälter (40) und einer oder mehreren Positionen in dem Arbeitsfluidkreislauf (100) zu überführen;
**dadurch gekennzeichnet, dass** das Leistungserzeugungssystem ferner umfasst:
mindestens eine Leitung (44a; 44b), welche zum Durchtritt von Arbeitsfluid zwischen dem Speicherbehälter (40) und dem Arbeitsfluidkreislauf ausgebildet ist, wobei die mindestens eine Leitung (44a; 44b) dazu ausgebildet ist, Arbeitsfluid aus dem Arbeitsfluidkreislauf stromabwärts der ersten Verdichtungskomponente (30) und stromaufwärts der zweiten Verdichtungskomponente (20) zu entfernen.

2. Das Leistungserzeugungssystem nach Anspruch 1, wobei die erste Verdichtungskomponente (30) ein einstufiger oder mehrstufiger Verdichter (30) ist.

3. Das Leistungserzeugungssystem nach Anspruch 1, wobei die zweite Verdichtungskomponente (20) eine Pumpe (20) mit variabler Drehzahl ist.

4. Das Leistungserzeugungssystem nach Anspruch 1, wobei:
das System ferner mindestens ein Ventil (42; 43) umfasst, welches ausgebildet ist zur Kontrolle einer Fluiddurchströmung der mindestens eine Leitung (44a; 44b), welche zum Durchtritt von Arbeitsfluid zwischen dem Speicherbehälter (40) und dem Arbeitsfluidkreislauf (100) ausgebildet ist; wobei vorzugsweise die Kontrolleinrichtung (41) dazu ausgebildet ist, das mindestens eine Ventil (42; 43) basierend auf mindestens einer bedingten Eingabe, welche von der Kontrolleinrichtung (41) empfangen wird, zu öffnen und zu schließen.

5. Das Leistungserzeugungssystem nach Anspruch 1, ferner umfassend eine Heizeinrichtung (12), welche stromaufwärts der Leistungserzeugungsturbine (10) angeordnet ist und einen Auslass aufweist, welcher in Fluidverbindung mit einem Einlass der Leistungserzeugungsturbine (10) steht.

6. Das Leistungserzeugungssystem nach Anspruch 1, ferner umfassend eine Heiz-/Kühlkomponente (45), welche in einer Heiz-/Kühlverbindung mit dem Speicherbehälter (40) steht und ausgebildet ist für eines oder beides von Erwärmen und Kühlen von Arbeitsfluid, welches in dem Speicherbehälter (40) vorliegt.

7. Ein Verfahren zum Kontrollieren eines Bestandes an Arbeitsfluid in einem Leistungserzeugungssystem, welches einen als geschlossene oder halbgeschlossene Schleife ausgebildeten Arbeitsfluidkreislauf (100) verwendet, wobei das Verfahren umfasst:
Expandieren eines Arbeitsfluids in einem als geschlossene oder halbgeschlossene Schleife ausgebildeten Arbeitsfluidkreislauf (100) über eine Leistungserzeugungsturbine (10) von einem höheren Druck auf einen niedrigeren Druck;
Verdichten des expandierten Arbeitsfluids in einer ersten Verdichtungskomponente (30);
weiteres Verdichten des Arbeitsfluids in einer zweiten Verdichtungskomponente (20); und
Überführen von Arbeitsfluid zwischen einer oder mehreren Positionen des als geschlossene oder halbgeschlossene Schleife ausgebildeten Arbeitsfluidkreislaufs (100) und einem Speicherbehälter (40);
wobei das Überführen des Arbeitsfluids zwischen einer oder mehreren Positionen des als geschlossene oder halbgeschlossene Schleife ausgebildeten Arbeitsfluidkreislaufs und dem Speicherbehälter (40) auf mindestens einer bedingten Eingabe in mindestens eine Kontrolleinrichtung (41), welche in einer Arbeitsanordnung mit dem als geschlossene oder halbgeschlossene Schleife ausgebildeten Arbeitsfluidkreislauf steht, basiert;
wobei der als geschlossene oder halbgeschlossene Schleife ausgebildete Arbeitsfluidkreislauf dazu ausgebildet ist, einen Betriebsdruckbereich zwischen der ersten Verdichtungskomponente (30) und der zweiten Verdichtungskomponente (20) aufrechtzuerhalten, wobei der Betriebsdruckbereich zwischen einem Minimumdruck P1 und einem Maximumdruck P2 liegt.

8. Das Verfahren nach Anspruch 7, wobei die zweite Verdichtungskomponente (20) eine Pumpe (20) mit variabler Drehzahl ist; wobei vorzugsweise die mindestens eine bedingte Eingabe in die mindestens eine Kontrolleinrichtung (41) eines oder mehreres von einer Änderung einer Betriebsgeschwindigkeit der Pumpe (20) mit variabler Drehzahl, einem zwischen der ersten Verdichtungskomponente (30) und der Pumpe (20) mit variabler Drehzahl gemessenen Saugdruck und einer Temperatur des Arbeitsfluids an einem Auslass der Leistungserzeugungsturbine (10) umfasst.

9. Das Verfahren nach Anspruch 7, wobei die mindestens eine Kontrolleinrichtung (41) dazu ausgebildet ist, einen Durchtritt von Arbeitsfluid von dem Speicherbehälter (40) zu mindestens einer Position in dem als geschlossene oder halbgeschlossene Schleife ausgebildeten Arbeitsfluidkreislauf (100) zu bewirken, um den Druck über dem Minimumdruck P1 zu halten; wobei optional eine der folgenden Bedingungen erfüllt ist:
ein Durchtritt von Arbeitsfluid von dem Speicherbehälter (40) erfolgt zu mindestens einer Position in dem als geschlossene oder halbgeschlossene Schleife ausgebildeten Arbeitsfluidkreislauf (100), welche stromaufwärts der ersten Verdichtungskomponente (30) und stromabwärts eines Auslasses der Leistungserzeugungsturbine (10) liegt;
ein Durchtritt von Arbeitsfluid von dem Speicherbehälter (40) erfolgt zu mindestens einer Position in dem als geschlossene oder halbgeschlossene Schleife ausgebildeten Arbeitsfluidkreislauf (100), welche stromabwärts der ersten Verdichtungskomponente (30) und stromaufwärts der zweiten Verdichtungskomponente (20) liegt.

10. Das Verfahren nach Anspruch 7, wobei die mindestens eine Kontrolleinrichtung (41) dazu ausgebildet ist, einen Durchtritt von Arbeitsfluid zu dem Speicherbehälter (40) ausgehend von mindestens einer Position in dem als geschlossene oder halbgeschlossene Schleife ausgebildeten Arbeitsfluidkreislauf (100) zu bewirken, um einen Druck unter dem Maximumdruck P2 zu halten; wobei optional eine der folgenden Bedingungen erfüllt ist:
ein Durchtritt des Arbeitsfluids zu dem Speicherbehälter (40) erfolgt ausgehend von mindestens einer Position in dem als geschlossene oder halbgeschlossene Schleife ausgebildeten Arbeitsfluidkreislauf (100), welche stromabwärts der ersten Verdichtungskomponente (30) und stromaufwärts der zweiten Verdichtungskomponente (20) liegt;
ein Durchtritt des Arbeitsfluids zu dem Speicherbehälter (40) erfolgt ausgehend von mindestens einer Position in dem als geschlossene oder halbgeschlossene Schleife ausgebildeten Arbeitsfluidkreislauf (100), welche stromabwärts der zweiten Verdichtungskomponente (20) und stromaufwärts eines Einlasses der Leistungserzeugungsturbine (10) liegt.

11. Das Verfahren nach Anspruch 7, wobei das Arbeitsfluid Kohlendioxid umfasst, wobei vorzugsweise das Arbeitsfluid mehr als 50 % an molarem Kohlendioxid umfasst.

12. Das Verfahren nach Anspruch 7, ferner umfassend eines oder beides von einem Erwärmen und Kühlen von Arbeitsfluid, welches in dem Speicherbehälter (40) vorliegt.

## Revendications

1. Système de production d'énergie comprenant :
un circuit de fluide de travail (100) à travers lequel un fluide de travail est cyclé entre une pression plus élevée et une pression plus basse ;
une turbine de génération d'énergie (10) en connexion fluidique avec le circuit de fluide de travail (100) de manière à recevoir un fluide de travail à la pression plus élevée, à dilater le fluide de travail, et à délivrer le fluide de travail à partir d'une sortie de celui-ci à la pression plus basse ;
un premier composant de compression (30) en aval de la turbine de génération d'énergie (10) et en connexion fluidique avec celle-ci ;
un second composant de compression (20) en aval du premier composant de compression et en connexion fluidique avec celui-ci ;
un réservoir de stockage (40) en communication fluidique avec le circuit de fluide de travail (100) ;
un dispositif de commande (41) configuré pour transférer un fluide de travail entre le réservoir de stockage (40) et une ou plusieurs positions dans le circuit de fluide de travail (100) ; **caractérisé en ce que** le système de production d'énergie comprend en outre
au moins une ligne (44a, 44b) configurée pour un passage de fluide de travail entre le réservoir de stockage (40) et le circuit de fluide de travail, dans lequel l'au moins une ligne (44a ; 44b) est configurée pour retirer un fluide de travail du circuit de fluide de travail en aval du premier composant de compression (30) et en amont du second composant de compression (20).

2. Système de production d'énergie selon la revendication 1, dans lequel le premier composant de compression (30) est un compresseur à étage simple ou à double étage (30).

3. Système de production d'énergie selon la revendication 1, dans lequel le second composant de compression (20) est une pompe à vitesse variable (20).

4. Système de production d'énergie selon la revendication 1, dans lequel :
le système comprend en outre au moins une soupape (42 ; 43) configurée pour la commande d'un écoulement de fluide à travers l'au moins une ligne (44a ; 44b) configurée pour le passage d'un fluide de travail entre le réservoir de stockage (40) et le circuit de fluide de travail (100) ; de préférence dans lequel le dispositif de commande (41) est configuré pour ouvrir et fermer l'au moins une soupape (42 ; 43) sur la base d'au moins une entrée conditionnelle reçue par le dispositif de commande (41).

5. Système de production d'énergie selon la revendication 1, comprenant en outre un appareil de chauffage (12) positionné en amont de la turbine de génération d'énergie (10) et ayant une sortie en communication fluidique avec une entrée de la turbine de génération d'énergie (10).

6. Système de production d'énergie selon la revendication 1, comprenant en outre un composant de chauffage/refroidissement (45) dans une connexion de chauffage/refroidissement avec le réservoir de stockage (40) et configuré pour le fluide de travail de chauffage et/ou de refroidissement qui est présent dans le réservoir de stockage (40).

7. Méthode de commande d'inventaire d'un fluide de travail dans un système de production d'énergie utilisant un circuit de fluide de travail en boucle fermée ou en boucle semi-fermée (100), la méthode comprenant :
la dilatation d'un fluide de travail dans un circuit de fluide de travail en boucle fermée ou en boucle semi-fermée (100) sur une turbine de génération d'énergie (10) d'une pression plus élevée à une pression plus basse ;
la compression du fluide de travail dilaté dans un premier composant de compression (30) ;
la compression en outre du fluide de travail dans un second composant de compression (20) ; et
le transfert de fluide de travail entre une ou plusieurs positions du circuit de fluide de travail en boucle fermée ou en boucle semi-fermée (100) et un réservoir de stockage (40) ;
dans laquelle le transfert du fluide de travail entre une ou plusieurs positions du circuit de fluide de travail en boucle fermée ou en boucle semi-fermée et le réservoir de stockage (40) est basé sur au moins une entrée conditionnelle dans au moins un dispositif de commande (41) dans un agencement de travail avec le circuit de fluide de travail en boucle fermée ou en boucle semi-fermée ;
dans laquelle le circuit de fluide de travail en boucle fermée ou en boucle semi-fermée est configuré pour maintenir une plage de pression fonctionnelle entre le premier composant de compression (30) et le second composant de compression (20), ladite plage de pression fonctionnelle étant entre une pression minimale P1 et une pression maximale P2.

8. Méthode selon la revendication 7, dans laquelle le second composant de compression (20) est une pompe à vitesse variable (20) ; de préférence dans laquelle l'au moins une entrée conditionnelle dans l'au moins un dispositif de commande (41) inclut un changement de la vitesse de fonctionnement de la pompe à vitesse variable (20), et/ou une pression d'aspiration mesurée entre le premier composant de compression (30) et la pompe à vitesse variable (20), et/ou une température du fluide de travail au niveau d'une sortie de la turbine de génération d'énergie (10).

9. Méthode selon la revendication 7, dans laquelle l'au moins un dispositif de commande (41) est configuré pour provoquer un passage de fluide de travail du réservoir de stockage (40) à au moins une position dans le circuit de fluide de travail en boucle fermée ou en boucle semi-fermée (100) pour maintenir une pression au-dessus de la pression minimale P1 ; éventuellement dans laquelle l'une des conditions suivantes est remplie :
un passage de fluide de travail à partir du réservoir de stockage (40) se fait vers au moins une position dans le circuit de fluide de travail en boucle fermée ou en boucle semi-fermée (100) qui est en amont du premier composant de compression (30) et en aval d'une sortie de la turbine de génération d'énergie (10) ;
un passage de fluide de travail à partir du réservoir de stockage (40) se fait vers au moins une position dans le circuit de fluide de travail en boucle fermée ou en boucle semi-fermée (100) qui est en aval du premier composant de compression (30) et en amont du second composant de compression (20).

10. Méthode selon la revendication 7, dans laquelle l'au moins un dispositif de commande (41) est configuré pour provoquer un passage de fluide de travail vers le réservoir de stockage (40) à partir d'au moins une position dans le circuit de fluide de travail en boucle fermée ou en boucle semi-fermée (100) pour maintenir une pression sous la pression maximale P2 ; éventuellement dans laquelle l'une des conditions suivantes est remplie :
un passage du fluide de travail vers le réservoir de stockage (40) se fait depuis au moins une position dans le circuit de fluide de travail en boucle fermée ou en boucle semi-fermée (100) qui est en aval du premier composant de compression (30) et en amont du second composant de compression (20) ;
un passage du fluide de travail vers le réservoir de stockage (40) se fait depuis au moins une position dans le circuit de fluide de travail en boucle fermée ou en boucle semi-fermée (100) qui est en aval du second composant de compression (20) et en amont d'une entrée de la turbine de génération d'énergie (10).

11. Méthode selon la revendication 7, dans laquelle le fluide de travail comprend du dioxyde de carbone, de préférence dans laquelle le fluide de travail comprend plus de 50 % mol. de dioxyde de carbone.

12. Méthode selon la revendication 7, comprenant en outre un fluide de travail de chauffage et/ou de refroidissement qui est dans le réservoir de stockage (40).
